Europäisches Patentamt

(19) European Patent Office

Office européen des brevets

(11) Publication number: **0 216 610**
**B1**

## (12) EUROPEAN PATENT SPECIFICATION

(45) Date of publication of the patent specification:
13.12.89

(51) Int. Cl.⁴: **G11B 5/66**

(21) Application number: **86307219.5**

(22) Date of filing: **19.09.86**

(54) Vertical magnetic recording medium with multilayered magnetisable film structure.

(30) Priority: **23.09.85  US 779324**

(43) Date of publication of application:
**01.04.87 Bulletin 87/14**

(45) Publication of the grant of the patent:
**13.12.89 Bulletin 89/50**

(84) Designated Contracting States:
**DE FR GB IT**

(56) References cited:
**EP-A- 0 158 338**
**EP-A- 0 169 928**
**EP-A- 0 169 929**
**EP-A- 0 214 878**
**DE-A- 2 016 422**

(73) Proprietor: **International Business Machines**
**Corporation, Old Orchard Road, Armonk, N.Y. 10504(US)**

(72) Inventor: **Robinson, Clifford John, 407 Henderson Drive,**
**San Jose California 95123(US)**

(74) Representative: **Hobbs, Francis John, IBM United**
**Kingdom Limited Intellectual Property Department**
**Hursley Park, Winchester Hampshire SO21 2JN(GB)**

ACTORUM AG

## Description

This invention relates to a thin film metal alloy medium for vertical magnetic recording, and in particular to such a medium with a magnetisable film structure having an improved ratio of perpendicular to horizontal coercivity.

In a thin film metal alloy medium for vertical magnetic recording, the magnetisable film is mounted on a substrate and is typically a single layer of a magnetisable alloy having an ordered crystalline structure with its easy axis of magnetisation oriented generally perpendicular to the substrate. One type of material used as the magnetisable film is a cobalt-chromium (CoCr) alloy which is sputter-deposited on the substrate, or on an intermediate nucleating layer deposited on the substrate, to form a film having a hexagonal close packed (hcp) crystalline structure with the [00.2] axis (the C-axis) oriented generally perpendicular to the substrate. The magnetic properties of a thin film metal alloy vertical recording medium made with various substrates, a titanium (Ti) nucleating layer and a single-layer CoCr perpendicular magnetisable film are described by Kobayashi, et al. in "High Density Perpendicular Magnetic Recording On Rigid Disks", Fujitsu Scientific & Technical Journal, V 19, No. 1 (March 1983), pp. 99-126. The magnetic properties of a vertical recording medium with an 8000 Angstrom ($8 \times 10^{-7}$m)cobalt-chromium-tantalum (CoCrTa) magnetisable film deposited on a 1000 Angstrom ($1 \times 10^{-7}$m)Cr nucleating layer are described by Langland and Albert in "Recording on Perpendicular Anisotropy Media with Ring Heads", IEEE Transactions on Magnetics, Vol. MAG-17, No. 6 (November 1981), pp. 2547-2549.

In order to achieve a sufficiently high perpendicular coercivity with a single-layer CoCr or CoCrTa alloy magnetisable film, it is necessary that a relatively high temperature be applied to the substrate during the sputter deposition process. This limits the formation of CoCr or CoCrTa alloy films to particular types of substrates, such as an aluminum-magnesium (AlMg) alloy or silicon. In addition to high perpendicular coercivity, another desired property of a vertical magnetic recording medium is a high ratio of perpendicular to horizontal coercivity. When a single layer CoCr alloy film is used as the magnetisable layer, the in-plane or horizontal coercivity is relatively high, which limits the achievable value of this ratio. Even though both the perpendicular and horizontal coercivities of a CoCr film are known to increase with an increase in substrate temperature during film deposition, the ratio of perpendicular to horizontal coercivity remains relatively constant regardless of the temperature of the substrate during deposition.

EP-A 214 878, which is a document comprised in the state of the art according to Articles 54 (3) and (4) EPC, discloses a magnetic recording medium comprising a magnetisable film structure formed from a plurality of films supported on a substrate, each of the films comprising a layer of non-magnetisable material and a layer of a magnetisable metal alloy including cobalt and chromium formed on the layer of non-magnetisable material. The non-magnetisable material mentioned in that prior document consists of silicon monoxide or silicon dioxide or a mixture of those two silicon oxides.

The object of the present invention is to provide an improved vertical magnetic recording medium.

a magnetic recording medium comprising a substrate and a magnetisable film structure formed from a plurality of films supported on said substrate, each film comprising a layer of non-magnetisable material and a layer of a magnetisable metal alloy including cobalt and chromium formed on said layer of non-magnetisable material, whereby said magnetisable film structure has perpendicular magnetic anisotropy, is characterised, according to the invention, in that said non-magnetisable material and said magnetisable metal alloy are alloys consisting of the same elements.

Because the magnetisable layers in the film structure of the medium according to the invention are separated by non-magnetisable layers, it is believed that magnetic flux reversal is impeded, thereby increasing the perpendicular coercivity. This multilayered film structure has a perpendicular coercivity greater, and a horizontal coercivity less, than a single magnetisable layer of the same alloy of the same thickness.

In one embodiment of the invention, the magnetisable CoCrTa alloy layers in each of the films are of a thickness less than the known thickness at which perpendicular magnetic orientation of a single layer of CoCrTa occurs. However, the multilayered film structure still exhibits perpendicular magnetic anisotropy, apparently because of dipole coupling between the separated magnetisable layers.

Because the magnetic film structure is made up of a multiplicity of films, each film comprising a non-magnetisable layer and a magnetisable layer, the perpendicular coercivity of the film structure is greater than a single-layer film of the same thickness. This permits a vertical recording medium with satisfactory perpendicular coercivity to be formed by deposition onto substrates at low temperature. Thus alternative substrate materials which cannot withstand high temperatures may be used.

According to another embodiment of the invention the magnetic recording medium includes an improved soft magnetisable underlayer film structure between the magnetisable film structure and the substrate to provide a magnetic flux return path when the medium is used with vertical magnetic recording pole heads located on the same side of the medium. The underlayer film structure also comprises a multiplicity of films, each film being made up of a non-magnetisable and a magnetisable layer, but in which each magnetisable layer is sufficiently thin so that magnetisation within each magnetisable layer is horizontal. This underlayer film structure exhibits horizontal magnetisation and provides a soft magnetisable material with very low in-plane coercivity.

In one embodiment of the invention both the perpendicular magnetisable film structure and the soft magnetisable underlayer film structure are formed of the same materials, i.e. alloys of cobalt, chromium and tantalum (CoCrTa), by altering the tantalum concentration in the magnetisable and non-magnetisable layers. This permits the media to be fabricated by sputter deposition in a single pump down of the sputtering chamber and with a single set of sputtering targets.

In order that the invention may be more readily understood, an embodiment will now be described with reference to the accompanying drawings, in which

Fig. 1 is a sectional view of a vertical magnetic recording medium with a conventional single magnetisable layer of CoCrTa on a CoCrTa non-magnetisable nucleating layer;

Fig. 2 is an M-H hysteresis loop for the medium shown in Fig. 1;

Fig. 3 is a sectional view of a medium with the multilayered magnetisable film structure according to the present invention;

Fig. 4 is an M-H hysteresis loop for the medium represented in Fig. 3;

Fig. 5 is a sectional view of the underlayer film structure according to the present invention which provides a magnetic flux return path when formed between the substrate and the magnetisable film structure represented in Fig. 3; and

Fig. 6 is an M-H hysteresis loop for the underlayer film structure represented in Fig. 5.

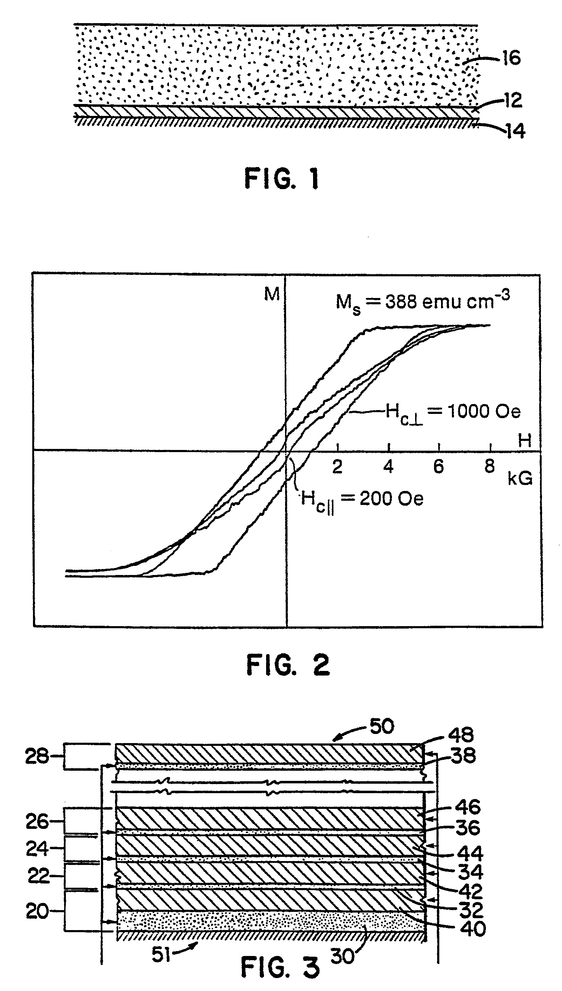

A conventional vertical magnetic recording medium with a single CoCrTa alloy magnetic layer is depicted in the sectional view of Fig. 1. The medium is formed by first sputter depositing a cobalt-chromium-tantalum (CoCrTa) nucleating layer 12 on a polyimide substrate 14. This nucleating layer 12, which is 500 Angstroms ($5 \times 10^{-8}$m) thick and non-magnetisable because of the relatively high amount of Ta present, i.e. $(Co_{85}Cr_{15})_{70}Ta_{30}$, serves to improve the preferred crystalline orientation of a subsequently deposited magnetisable layer 16. The single magnetisable layer 16 is sputter deposited to a thickness of 5000 Angstroms ($5 \times 10^{-7}$m) on the nucleating layer 12. The CoCrTa magnetisable layer 16 has a composition, in atomic . percent (at.%), of $(Co_{85}Cr_{15})_{90}Ta_{10}$ and a thickness of approximately 5000 Angstroms ($5 \times 10^{-7}$m). The deposition of layers 12 and 16 occurred at a substrate temperature of 200°C.

The M-H hysteresis loop for the CoCrTa medium of Fig. 1 is shown in Fig. 2. The medium has a perpendicular coercivity of 1000 Oersteds (Oe) (12.6 amp/metre) and a horizontal coercivity of 200 Oe (2.5 amp/metre) for a ratio of perpendicular to horizontal coercivity of approximately 5. The structure of the conventional single-layer medium of Fig. 1 and its corresponding M-H hysteresis data of Fig. 2 are typical for single-layer alloys containing Co and Cr used for vertical recording. Both the perpendicular and horizontal coercivities of single layer CoCr films are known to increase with increased substrate deposition temperature, but the ratio of the perpendicular to horizontal coercivity remains relatively constant in the range of approximately 4 to 5.

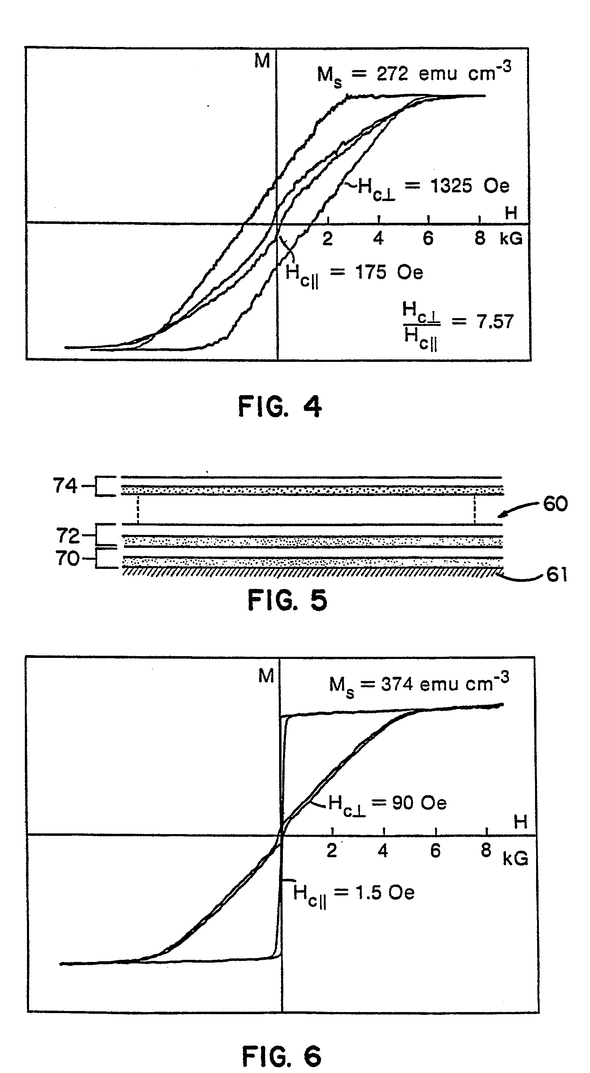

A vertical recording medium according to the present invention is represented in sectional view in Fig. 3. A multilayered magnetisable film structure 50 is deposited on a suitable substrate, e.g. polyimide substrate 51, and comprises a multiplicity of films, such as typical films 20, 22, 24, and 26. Each film is made up of a non-magnetisable layer of approximately 200 Angstroms ($2 \times 10^{-8}$m) thickness and a magnetisable layer of approximately 500 Angstroms ($5 \times 10^{-8}$m) deposited on the non-magnetisable layer. Although only films 20, 22, 24 and 26 are represented in Fig. 3, the actual film structure is formed of eight such films. The non-magnetisable layers in each film are designated 30, 32, 34, 36 and 38 and the magnetisable layers are designated 40, 42, 44, 46 and 48. The non-magnetisable layer 30 initially deposited on substrate 51 is less well oriented than the subsequent layers and thus has a thickness of approximately 500 Angstroms ($5 \times 10^{-8}$m), as compared to 200 Angstroms ($2 \times 10^{-8}$m) for the other non-magnetisable layers. The total thickness of the film structure in Fig. 3 is approximately 5200 Angstroms ($5.2 \times 10^{-7}$m). The composition, in at.%, is $(Co_{85}Cr_{15})_{70}Ta_{30}$ for the non-magnetisable layers and $(Co_{85}Cr_{15})_{90}Ta_{10}$ for the magnetisable layers.

The magnetisable film structure 50 was formed by sputter deposition with dual targets, a $Co_{85}Cr_{15}$ target and a Ta target, in a single pump down of the sputtering chamber. The substrate temperature was maintained at 200°C and the Argon pressure in the chamber was approximately $3 \times 10^{-3}$ Torr (0.4 Pa). In the particular sputtering apparatus used in forming the film structure 50, the $Co_{85}Cr_{15}$ target was connected to a DC power source and the Ta target was connected to an RF power source. The individual magnetisable and non-magnetisable layers making up film structure 50 were formed by modulating the RF power to the Ta target to thereby alter the Ta composition in each of the individual layers. Thus it is possible to consider the magnetisable film structure 50 as a "single" film in which the Ta composition is merely modulated or varied at different points in the overall film structure to produce the individual non-magnetisable and magnetisable CoCrTa layers.

Thin films of CoCrTa, with a Ta concentration less than approximately 30 at.%, possess a magnetocrystalline anisotropy derived from cobalt's hexagonal structure. It is known that a single CoCrTa film of 500 Angstroms ($5 \times 10^{-8}$m) thickness exhibits horizontal magnetization. However, in the magnetisable film structure 50, even though the individual magnetisable layers, i.e. layers 40, 42, 44, 46 and 48, are each 500 Angstroms ($5 \times 10^{-8}$m) thick, the overall film structure exhibits perpendicular magnetisation. This suggests that there is magnetostatic coupling between the individual magnetisable layers which causes the overall magnetic orientation to be perpendicular to the substrate.

The M-H loop for the magnetisable film structure 50 is shown in Fig. 4. The magnetisable film structure 50 has a perpendicular coercivity of 1325 Oe (16.6 amp/metre) and a horizontal coercivity of 175 Oe (2.2 amp/metre), which results in a ratio of perpendicular to horizontal coercivity of 7.57. This value is a substantial improvement over that for the conventional single-layer CoCr or CoCrTa films.

The film structure 50 has substantially the same thickness of magnetisable material as the conventional single layer CoCrTa, yet a significantly higher perpendicular coercivity. It is believed that one of the reasons for this is that the non-magnetisable layers 30, 32, 34, 36 and 38 in each of the films 20, 22, 24, 26 and 28 inhibit magnetic flux reversal in the magnetisable layers, thereby increasing the overall perpendicular coercivity.

In the multilayered magnetisable film structure 50, the magnetisation is usually perpendicular to the plane of the film. However, when the magnetisation is aligned horizontally by an external magnetic field applied in the plane of the film structure, the magnetostatic coupling between the magnetisable layers vanishes and the individual magnetisable layers behave separately. Thus the magnetisation reversal takes place independently within each layer. The non-magnetisable layers play no role in this process and thus have no effect on the in-plane coercivity. The lower in-plane coercivity of the film structure 50, as compared to single-layer CoCr or CoCrTa films, apparently results only from the fact that lower in-plane coercivity is an intrinsic property of thinner films.

While in the embodiment shown in Fig. 3, the preferred non-magnetisable material is CoCrTa with a Ta concentration greater than approximately 30 at.% in order to ensure the non-magnetisable property of the CoCrTa alloy, other types of non-magnetisable material may also form the non-magnetic layers in the film structure.

In those applications of the vertical recording medium where it is desired to utilise pole heads on the same side of the medium, such as in a flexible disk application, it is necessary to have an underlayer which provides a magnetic flux return path in the medium, such as a conventional underlayer of nickel-iron (NiFe).

An underlayer according to the present invention which provides such a magnetic flux return path is shown in Fig. 5. This underlayer film structure 60 is a second film structure which is deposited between the substrate and the magnetisable film structure depicted in Fig. 3. The underlayer film structure 60 comprises a multiplicity of films, such as typical films 70, 72 and 74, each film being made up of a non-magnetisable and a magnetisable layer, formed on a substrate 61. Each layer is a CoCrTa alloy of approximately 150 Angstroms ($15\times10^{-9}$m) thickness. The Ta concentration is 50 at.% in the non-magnetisable layers and 10 at.% in the magnetisable layers. Because each of the films 70, 72 and 74 is substantially thin, i.e. on the order of approximately 150 Angstroms ($1.5\times10^{-8}$m), only in-plane magnetisation is observed and there is no magnetostatic coupling between the magnetisable layers. Thus the underlayer film structure exhibits no perpendicular magnetisable anisotropy. Each of the magnetisable layers retains its magnetisation in the plane of the film structure, even when the underlayer film structure 60 is deposited to a total thickness of approximately 1000 Angstroms ($1\times10^{-7}$m). As shown in the M-H loop of Fig. 6, the underlayer film structure 60 has an extremely low horizontal coercivity of approximately 1.5 Oe (0.018 amp/metre).

The underlayer film structure 60 was fabricated under the same sputtering conditions as described previously for the magnetisable film structure 50 with the exception that the substrate was maintained at 110°C. Thus a vertical recording medium according to the present invention containing the soft magnetisable underlayer film structure as a magnetisable flux return path and the multilayered magnetic film structure can be fabricated with a single set of targets in a single pump down of the sputtering chamber by merely modulating the power to the Ta target.

The above description and the drawings relate only to the inventive structure which form a part of the vertical recording medium in accordance with the invention, and not to the conventional well-known portions of the medium and the medium fabrication processes. For example, in the fabrication of thin film metal alloy disks, it is known to provide a protective overcoat, such as a sputtered carbon film, over the magnetisable film and, in certain instances, to provide an adhesion layer, such as sputtered titanium film, between the overcoat and the magnetisable film.

While Ta was used as the alloy to form the ternary CoCrX alloy for both the magnetisable and non-magnetisable layers in the film structures 50 and 60, other refractory metals, such as tungsten (W), titanium (Ti), niobium (Nb) or vanadium (V) may be used in place of Ta. It is also possible to form film structures in accordance with the present invention by means other than sputter deposition, including chemical vapour deposition, evaporation, molecular beam epitaxy, or plasma deposition.

## Claims

1. A magnetic recording medium comprising a substrate (51) and a magnetisable film structure (50) formed from a plurality of films (20–28) supported on said substrate, each film comprises a layer (30–38) of non-magnetisable material and a layer (40–48) of a magnetisable metal alloy including cobalt and chromium formed on said layer of non-magnetisable material, whereby said magnetisable film structure has perpendicular magnetic anisotropy, the medium being characterised in that said non-magnetisable material and said magnetisable metal alloy are alloys consisting of the same elements.

2. A medium according to claim 1, characterised in that said magnetisable metal alloy comprises cobalt, chromium and an element from the group consisting of tantalum, niobium, tungsten, titanium and vanadium.

3. A medium according to claim 1 or claim 2, characterised in that said layer of non-magnetisable material and said layer of magnetisable metal alloy are sputter deposited layers.

4. A medium according to any one of the preceding claims, characterised in that it comprises a protective overcoat formed on said magnetisable film structure.

5. A medium according to any one of the preceding claims characterised in that it comprises a soft magnetisable underlayer (60) between said substrate (61) and said magnetisable film structure (50) for providing a magnetic flux return path.

6. A medium according to claim 5, characterised in that said soft magnetisable underlayer is a film structure formed from a plurality of films (70–74), each film in said underlayer film structure comprising a layer of non-magnetisable material and a layer of a magnetisable metal alloy including cobalt and chromium formed on said layer of non-magnetisable material, each layer of magnetisable metal alloy in said underlayer film structure being sufficiently thin such that said underlayer film structure exhibits no perpendicular magnetic anisotropy.

7. A medium according to claim 6, characterised in that said magnetisable metal alloy in said underlayer film structure comprises cobalt, chromium and an element selected from the group consisting of tantalum, niobium, tungsten, titanium and vanadium.

8. A medium according to claim 6 or claim 7, characterised in that said layer of non-magnetisable material and said layer of magnetisable metal alloy in each of said films in said underlayer film structure are alloys consisting of the same elements.

9. A medium according to claim 8, characterised in that said alloys in said magnetisable film structure and said underlayer film structure consist of the same elements.

## Patentansprüche

1. Magnetisches Registriermittel, bestehend aus:
einem Substrat (51) und einer magnetisierbaren Filmstruktur, die aus einer Vielzahl von auf diesem Substrat aufgebrachten Filmen (20–28) zusammengesetzt ist,
wobei jeder Film eine Schicht (30–38) eines nicht magnetisierbaren Stoffes und eine Schicht (40–48) einer magnetisierbaren Metallegierung aufweist, zu der Kobalt und Chrom gehören und die auf dem nichtmagnetisierbaren Stoff angeordnet ist, wobei die genannte magnetisierbare Filmstruktur eine perpendikulare magnetische Anisotropie aufweist und das Mittel dadurch gekennzeichnet ist, daß es sich bei dem genannten nichtmagnetischen Stoff und der genannten magnetisierbaren Metallegierung um Legierungen handelt, die aus denselben Elementen bestehen.

2. Mittel gemäss Anspruch 1, dadurch gekennzeichnet, daß die genannte magnetisierbare Metallegierung aus Kobalt, Chrom und einem Element der Gruppe besteht, zu der Tantal, Niobium, Titan, Wolfram und Vanadium gehören.

3. Mittel gemäss Anspruch 1 oder 2, dadurch gekennzeichnet, daß die genannte Schicht aus nichtmagnetisierbarem Stoff sowie die genannte Schicht aus magnetisierbarer Metallegierung durch Zerstäubung unter Ionenbeschuss aufgebracht wurden.

4. Mittel nach allen der vorstehenden Ansprüche, dadurch gekennzeichnet, daß es eine auf der genannten magnetisierbaren Filmstruktur aufgebrachte Schutzoberschicht aufweist.

5. Mittel nach allen der vorstehenden Ansprüche, dadurch gekennzeichnet, daß es eine weiche magnetisierbare Unterschicht (60) zwischen dem genannten Substrat (51) und der genannten magnetisierbaren Filmstruktur (50) aufweist, die eine Rückleitung für den Magnetfluss bildet.

6. Mittel nach Anspruch 5, dadurch gekennzeichnet, daß die genannte weiche magnetisierbare Unterschicht eine Filmstruktur ist, die aus einer Vielzahl von Filmen (70–74) gebildet wird, daß jeder Film in der genannten Unterschicht-Filmstruktur eine Schicht aus nichtmagnetisierbarem Stoff und eine Schicht aus magnetisierbarer Metallegierung aufweist, zu der Kobalt und Chrom gehören und die auf der genannten Schicht aus nichtmagnetisierbarem Stoff aufgebracht ist, wobei jede Schicht aus magnetisierbarer Metallegierung in der genannten Unterschicht-Filmstruktur so dünn ist, daß die genannte Unterschicht-Filmstruktur keine perpendikulare magnetische Anisotropie zeigt.

7. Mittel nach Anspruch 5, dadurch gekennzeichnet, daß die genannte magnetisierbare Metallegierung in der genannten Unterschicht-Filmstruktur Kobalt, Chrom und ein Element aus der Gruppe aufweist, zu der Tantal Niobium, Titan, Wolfram und Vanadium gehören.

8. Mittel gemäss Anspruch 6 oder 7, dadurch gekennzeichnet, daß es sich bei der genannten Schicht aus nichtmagnetisierbarem Stoff sowie bei der genannten Schicht aus magnetisierbarer Metallegierung in jedem der genannten Filme der genannten Unterschicht-Filmstruktur um Legierungen handelt, die aus denselben Elementen bestehen.

9. Mittel gemäss Anspruch 8, dadurch gekennzeichnet, daß die genannten Legierungen in der genannten magnetisierbaren Filmstruktur und in der genannten Unterschicht-Filmstruktur aus denselben Elementen bestehen.                     °

## Revendications

1. Milieu magnétique d'enregistrement comprenant un substrat (51) et une structure de film magnétisable (50) formée d'une pluralité de films (20–28), portée par le substrat,
chaque film comprenant une couche (30–38) de matériau non magnétisable et une couche (40–48) d'un alliage métallique magnétisable comportant du cobalt et du chrome formée sur la couche de matériau non magnétisable, d'où il résulte que la structure de film magnétisable a une anisotropie magnétique perpendiculaire, le milieu étant caractérisé en ce que le matériau non magnétisable et l'alliage métallique magnétisable sont des alliages constitués des mêmes éléments.

2. Milieu selon la revendication 1, caractérisé en ce que l'alliage métallique magnétisable comprend du cobalt, du chrome et un élément appartenant au groupe constitué par le tantale, le niobium, le tungstène, le titane et le vanadium.

3. Milieu selon l'une des revendications 1 ou 2, caractérisé en ce que la couche de matériau non magnétisable et la couche d'alliage métallique magnétisable sont des couches déposées par pulvérisation.

4. Milieu selon l'une quelconque des revendications précédentes caractérisé en ce qu'il comprend un revêtement protecteur formé sur la structure de film magnétisable.

5. Milieu selon l'une quelconque des revendications précédentes caractérisé en ce qu'il comprend une sous-couche à aimantation non rémanente (60) entre le substrat (61) et la structure de film magnétisable (50) pour fournir un trajet de retour du flux magnétique.

6. Milieu selon la revendication 5, caractérisé en ce que la sous-couche à aimantation non rémanente est une structure de film formée d'une pluralité de films (70–74), chaque film de cette stucture de film de sous-couche comprenant une couche de matériau non magnétisable et une couche d'alliage métallique magnétisable comportant du cobalt et du chrome formée sur la couche de matériau non magnétisable, chaque couche d'alliage métallique magnétisable de la structure de film de sous-couche étant suffisamment mince pour que la structure de film de sous-couche n'ait pas d'anisotropie magnétique perpendiculaire.

7. Milieu selon la revendication 6, caractérisé en ce que l'alliage métallique magnétisable dans la structure de film de sous-couche comporte du cobalt, du chrome et un élément choisi dans le groupe constitué par le tantale, le niobium, le tungstène, le titane et le vanadium.

8. Milieu selon l'une des revendications 6 ou 7 caractérisé en ce que la couche de matériau non magnétisable et la couche d'alliage métallique magnétisable dans chacun des films de la structure de film de sous-couche sont des alliages constitués des mêmes éléments.

9. Milieu selon la revendication 8 caractérisé en ce que les alliages de la structure de film magnétisable et de la structure de film de sous-couche sont constitués des mêmes éléments.

**FIG. 1**

$M_s = 388$ emu cm$^{-3}$

$H_{c\perp} = 1000$ Oe

$H_{c\parallel} = 200$ Oe

**FIG. 2**

**FIG. 3**

$M_s = 272$ emu cm$^{-3}$

$M$

$\sim H_{c\perp} = 1325$ Oe

$H$

2    4    6    8    kG

$H_{c\parallel} = 175$ Oe

$$\frac{H_{c\perp}}{H_{c\parallel}} = 7.57$$

**FIG. 4**

74 ⊏

60

72 ⊏

70 ⊏

61

**FIG. 5**

$M$

$M_s = 374$ emu cm$^{-3}$

$H_{c\perp} = 90$ Oe

$H$

2    4    6    8    kG

$H_{c\parallel} = 1.5$ Oe

**FIG. 6**